# EUROPEAN PATENT SPECIFICATION

(11) **EP 1 378 169 B1**
(45) Date of publication and mention of the grant of the patent: **03.10.2007**
(21) Application number: 02425433.6
(22) Date of filing: 01.07.2002
(51) Int. Cl.: A22C 7/00, A47J 27/20

(54) **Ham boiler**
Schinkenkocher
Moule pour jambon

(43) Date of publication of application: 07.01.2004
(73) Proprietor: S.p.A. Egidio Galbani, 20066 Melzo (Milano) (IT)
(72) Inventor: Moraglia,Roberto, c/o S.p.A. Egidio Galbani, 20066 Melzo (Milano) (IT)
(74) Representative: Long, Giorgio

(56) References cited:
- CH-A- 48 075
- CH-A- 159 933
- FR-A- 629 041
- FR-A- 1 407 732
- GB-A- 1 008 149
- US-A- 1 586 528

## Description

The present invention relates to a mould for cooking meat in order to prepare cooked ham. Such a mould is known from eg. US-A-1 586 528.

It is known that the process of preparing cooked ham is lengthy and complex. In fact, it requires the setting-up of many steps which comprise the selection of pieces of meat, boning, salting with brine, churning, loading of the pieces of raw meat into a suitable container of a mould, cooking, cooling, removal from the mould, and packaging.

It is also known that the cooking step is preceded by a first pressing step and may be followed by a second pressing step. The above-mentioned pressing and cooking steps are in fact responsible for giving the final cooked ham the desired shape.

The first pressing step, which is generally performed by means of pneumatic presses which act on the lid of the container of the mould containing the pieces of raw meat, in fact allows to adapt the pieces to the shape of the container of the mould.

During the cooking step, on the other hand, the pieces of meat adhere to one another to produce a cooked ham of stable shape. In fact, during this step, the container of the mould is closed by the cover and is placed in a conventional oven, heated to a temperature generally of about 70-73°C. In this manner, the saline-soluble proteins such as, for example, actin, myosin, and actomyosin, which are extracted from the pieces of meat during the churning step, are caused to coagulate, sealing together the pieces of meat.

To compensate for the natural weight loss due to the leakage of liquids during the cooking step and to give the ham a stable shape, the pieces of meat may be subjected to a second pressing step whilst they are still hot.

It is known that this second pressing step can be eliminated with the use of a mould provided with a cover having a special system of springs which enables the natural weight loss of the pieces of meat to be taken up inside the container of the mould, thus avoiding the need to perform the second pressing.

In particular, the lid provides for the presence of pairs of coaxial and concentric coil springs, wound in opposite directions, disposed on the lid of the mould. Each pair of springs is formed by an inner, preferably cylindrical spring and an outer spring with successive substantially rectangular coils of equal width but progressively reduced length.

The outer spring of variable deformability and elastic constant, favours the distribution of the pressure over the lid and the maintenance of a uniform pressure on the lid. The inner spring, on the other hand, which is preferably wound in the opposite direction to the outer spring, gives rise to a thrust compensation.

The inner and outer springs are arranged around pillars which engage the lid of the mould on an upper handle provided with racks at its ends. The lid is closed onto the container of the mould by pushing the handle downwards so that the teeth of the rack engage with pressure on an outer rim of the container of the mould. During the closure stage, the outer and inner springs are thus compressed and subjected to sufficient preloading to cause the natural weight loss of the pieces of meat inside the container of the mould to be taken up without the need for a second pressing operation.

The moulds used up to now for the preparation of cooked ham are made of aluminium alloy and have different capacities according to the weight of the cooked ham to be produced.

Cooked hams in fact exist with weights of from 6 to 8 kg (small), from 7 to 9 kg (medium), and from 8 and 10 kg (large).

At the moment, these hams are thus produced in three moulds of different capacities, which inevitably leads to a considerable increase in costs.

Moreover, the Applicant has observed that the shape of the container of the mould and the pressure exerted on it are critical for the production of cooked hams in which the pieces of meat of which they are formed adhere to one another completely, without the formation of cavities between one piece and another.

The problem underlying the present invention is therefore that of providing a mould for the preparation of cooked ham which overcomes the above-mentioned disadvantages.

This problem is solved by a mould for the preparation of cooked ham as specified in the appended claims.

Further characteristics and advantages of the mould of the present invention will become clearer from the description of a preferred embodiment, given below by way of non-limiting example, with reference to the appended drawings.
Figure 1 is an exploded view of a mould according to the present invention, sectioned on the axis X-X',
Figure 2 is an exploded view of the mould of Figure 1, taken in the direction A, and
Figure 3 is a plan view of the container of the mould according to the present invention.

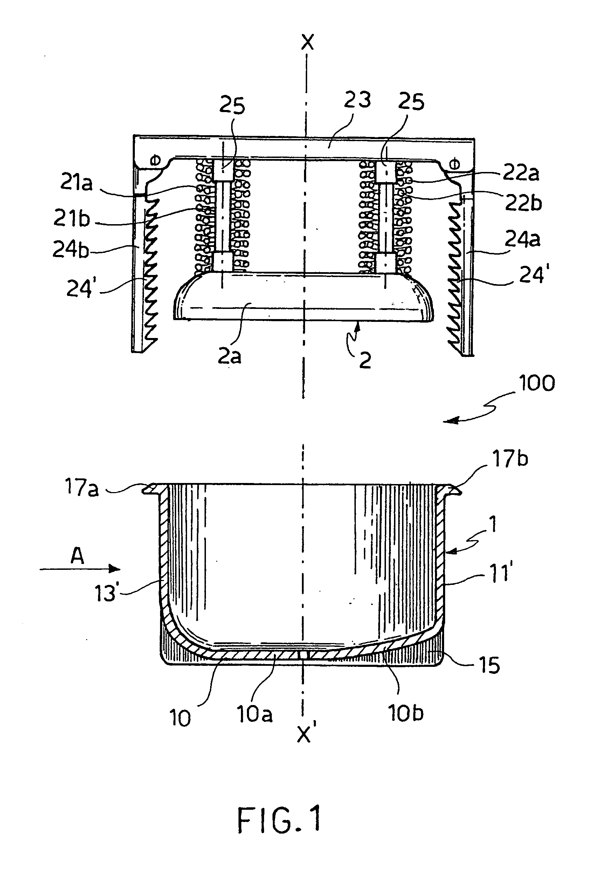

As shown in the above-mentioned Figures 1, 2 and 3, the mould according to the present invention comprises a container 1 and a lid 2.

The container 1 has a substantially polygonal base 10. In particular, the base 10 comprises three sides 12, 13, 14 arranged in a "C"-shape and connected by curved portions 13a, 13b, and a fourth side 11 which is shorter than the opposite side 13 and is connected to the adjacent sides 12, 14 by substantially straight portions 11a, 11b.

The ratio between the shorter side 11 and the opposite side 13 is between 0.7 and 0.9, more preferably, it is about 0.8.

The base 10 is formed by a flat surface portion 10a and an upwardly-inclined surface portion 10b.

The upwardly-inclined surface portion 10b corresponds substantially to the area bordered by the shorter side 11 and by the respective portions 11a, 11b connecting it to the adjacent sides.

The flat surface portion 10a corresponds substantially to the area bordered by the three sides 12, 13, 14 arranged in a "C"-shape and by the respective curved connecting portions 13a, 13b.

Advantageously, the inclined surface portion 10b is inclined upwards relative to the flat surface portion 10a at an angle of between 5 and 20°; even more advantageously, the inclined surface portion 10b is inclined upwards relative to the flat surface portion 10a at an angle of about 13°.

Respective side walls 11', 11'a, 11'b, 12', 13', 13'a, 13'b, 14 extend substantially vertically upwards without interruption from the sides 11, 11a, 11b, 12, 13, 13a, 13b, 14 of the base 10 and are connected to the base 10 by a curved peripheral portion.

The curved peripheral portion forms, with the flat surface portion 10a, a connection having an arcuate profile in section with a radius of curvature of between 50 and 70 mm, preferably between 55 and 65 mm, even more preferably of about 60 mm.

The side walls 11', 11'a, 11'b, 12', 13', 13'a, 13'b, 14' end at the top in a rim 17.

The rim 17 comprises two elements 17a, 17b projecting outwards relative to the container 1 and substantially perpendicular to the two opposed walls 11', 13' that have different dimensions.

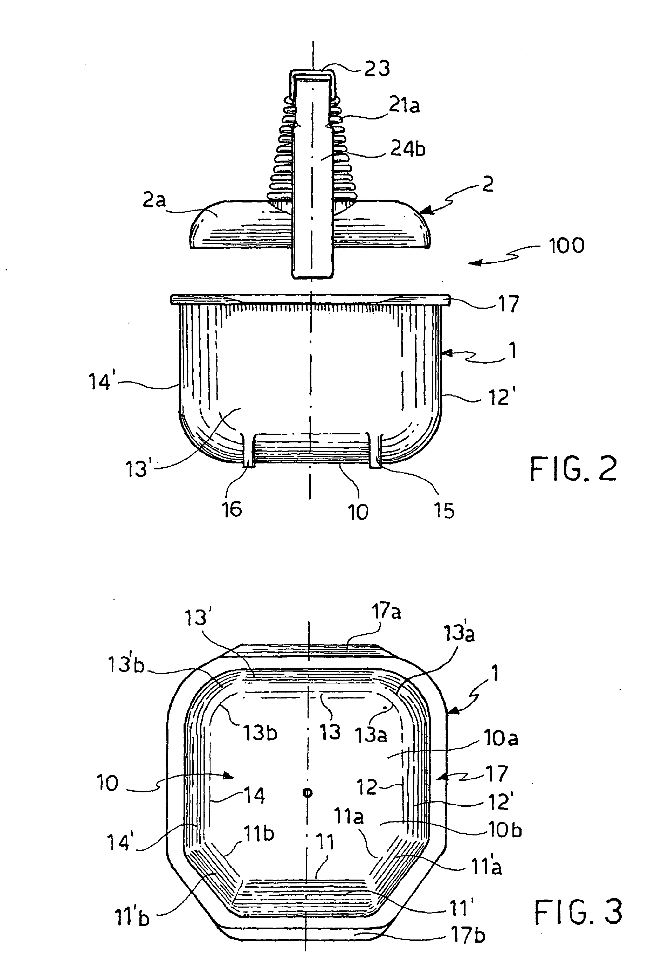

As shown in Figures 1 and 2, ribs 15, 16 for supporting the mould extend along the entire length of the base 10 of the container 1.

The container 1 may be made of various materials. It is preferably made of aluminium alloy or steel.

The container 1 of the mould preferably has a height of between 150 and 200 mm.

The projecting elements 17a, 17b of the rim portion 17 enable the container 1 to be connected to the lid 2.

The lid 2 may be of the type used in conventional moulds for the production of cooked ham.

Preferably, the lid 2 is a lid having a system of springs which enable the second pressing stage to be eliminated.

In detail, the lid 2 has, on its outer surface 2a, two pairs of coaxial and concentric coil springs 21a, 21b, 22a, 22b wound in opposite directions. Each pair of springs is formed by an inner spring 21b, 22b, preferably with a cylindrical configuration and uniform characteristics, and an outer spring 21a, 22a with successive substantially rectangular coils of equal width but of progressively reduced length.

The outer springs 21a, 22a of variable deformability and elastic constant favour the distribution of the pressure over the lid 2, keeping the lid 2 levelled. The inner, cylindrical springs 21b, 22b, on the other hand, which are preferably wound in the opposite direction to the outer ones 21a, 22a, give rise to a thrust compensation. The outer springs 21a, 22a with coils having a variable extent, of free length, have a larger number of coils than the inner springs 21b, 22b.

The positions of the springs 21a, 21b, 22a, 22b are maintained by means of guide pillars 25 coaxial with the springs 21a, 21b, 22a, 22b. The guide pillars 25 engage the lid 2 on an upper handle 23. The upper handle 23 has, at its ends, racks 24a, 24b the teeth 24' of which engage with pressure on the projecting portions 17a, 17b of the rim 17 of the container 1 during the closure of the lid 2, compressing the springs 21a, 21b, 22a, 22b and subjecting them to preloading.

As stated above, the preloading is sufficient to press the pieces of meat inside the container 1 completely during and after the cooking step, thus enabling the second pressing step to be eliminated.

The shape of the container 1 according to the present invention is the result of a careful investigation carried out by the Applicant who has observed that it is the converging shape of the container 1 formed by the upwardly-inclined surface portion 10b of the base 10 and by the proportionally raised respective side walls 11', 11'a, 11'b which cause the cooked ham produced to be free of cavities.

The Applicant has also observed that the above-mentioned converging shape of the container 1 enables cooked hams of different weights to be prepared in a single mould. In particular, this converging shape of the container 1 constituted by the upwardly-inclined surface portion 10b of the base 10 and by the respective proportionally raised side walls 11', 11'a, 11'b enables small, medium and large cooked hams, that is, hams of from 6 to 10 kg, to be prepared.

The advantages of the mould of the present invention are clear from the foregoing description.

A first advantage is that the shape of the container 1 of the mould of the present invention permits maximum adhesion of the pieces of meat to one another, ensuring the production of a compact cooked ham, free of cavities.

A second advantage is that the container 1 of the present invention is suitable for the preparation of cooked hams of different weights. This leads to a considerable saving in costs.

Naturally, only some specific embodiments of the mould of the present invention have been described and a person skilled in the art will be able to apply thereto all of the modifications necessary for its adaptation to particular applications without, however, departing from the scope of protection of the present invention.

For example, a person skilled in the art will easily appreciate that the shape of the container 1 is essential in order to impart the particular technical characteristics to the ham, whereas the rim portion 17 and the ribs 15 and 16 do not affect the shape and compactness of the final cooked ham. It will therefore be possible to replace them with support means of other types typical of articles of this type.

## Claims

1. A mould (100) for cooking meat in order to prepare cooked ham, comprising a container (1) and a lid (2), wherein the container (1) has a substantially polygonal base (10) comprising three sides (12, 13, 14) arranged in a "C"-shape and connected by curved portions (13a, 13b), and a fourth side (11) which is shorter than the opposite side (13) and is connected to the adjacent sides (12, 14) by means of substantially straight portions (11a, 11b), the base (10) being formed by a flat surface portion (10a) and an upwardly-inclined surface portion (10b), the upwardly-inclined surface portion (10b) corresponding substantially to the area bordered by the shorter side (11) and by the respective portions (11a, 11b) connecting it to the adjacent sides, and the flat surface portion (10a) corresponding substantially to the area bordered by the three sides (12, 13, 14) arranged in a "C"-shape and by the respective curved connecting portions (13a, 13b), **characterized in that** respective side walls (11', 11'a, 11'b, 12', 13', 13'a, 13'b, 14'), extending substantially vertically upwards without interruption from the sides (11, 11a, 11b, 12, 13, 13a, 13b, 14) of the base (10), are connected to the flat surface portion (10a) of the base (10) by a curved peripheral portion forming a connection having an arcuate profile in section with a radius of curvature of between 50 and 70 mm.

2. A mould (100) according to claim 1 in which the inclined surface portion (10b) is inclined upwards relative to the flat surface portion (10a) at an angle of between 5 and 20°.

3. A mould (100) according to Claim 2 in which the inclined surface portion (10b) is inclined upwards relative to the flat surface portion (10a) at an angle of about 13°.

4. A mould (100) according to any one of Claims 1 to 3 in which the ratio between the shorter side (11) and the opposite side (13) is between 0.7 and 0.9.

5. A mould (100) according to any one of Claims 1 to 4 in which the container (1) has a height of between 150 and 200 mm.

6. A method of preparing a cooked ham, comprising the steps of selecting pieces of meat, boning, salting, churning, loading of the pieces of raw meat into a suitable container of a mould, cooking, cooling, removal from the mould, and packaging, the method being **characterized in that** the cooking step is performed by means of the mould (100) described in preceding Claims 1 to 5.

7. Cooked ham which can be produced by the method described in Claim 6.

## Patentansprüche

1. Form (100) zum Kochen von Fleisch, um gekochten Schinken zuzubereiten, mit einem Behälter (1) und einem Deckel (2), wobei der Behälter (1) einen im Wesentlichen polygonalen Boden (10) aufweist mit drei in einer "C"-Form angeordneten und durch gebogene Bereiche (13a. 13b) verbundenen Seiten (12, 13, 14), und mit einer vierten Seite (11), die kürzer als die gegenüberliegende Seite (13) ist und die mit den angrenzenden Seiten (12, 14) mit Hilfe von im Wesentlichen geraden Bereichen (11a, 11b) verbunden ist, wobei der Boden (10) durch einen ebenen Flächenbereich (10a) und einen aufwärts geneigten Flächenbereich (10b) gebildet wird, wobei der aufwärts geneigte Flächenbereich (10b) im Wesentlichen korrespondiert mit dem durch die kürzere Seite (11) und durch die entsprechenden Bereiche (11a, 11b), die diese mit den angrenzenden Seiten verbinden, begrenzten Bereich, wobei der ebene Flächenbereich (10a) im Wesentlichen korrespondiert mit der durch die drei Seiten (12, 13, 14), die in einer "C"-Form angeordnet sind, und durch die entsprechenden gebogenen Verbindungsbereiche (13a, 13b) begrenzten Fläche, **dadurch gekennzeichnet, dass** entsprechende Seitenwände (11', 11'a, 11'b, 12', 13', 13'a, 13'b, 14'), die sich im Wesentlichen vertikal aufwärts ohne Unterbrechung von den Seiten (11, 11a, 11b, 12, 13, 13a, 13b, 14) des Bodens (10) erstrecken, verbunden sind mit dem ebenen Flächenbereich (10a) des Bodens (10) durch einen gebogenen Randbereich, wobei eine Verbindung ausgebildet wird, die ein im Schnitt bogenförmiges Profil mit einem Krümmungsradius von zwischen 50 und 70 mm aufweist.

2. Form (100) gemäß Anspruch 1, bei der der geneigte Flächenbereich (10b) relativ zu dem ebenen Flächenbereich (10a) unter einem Winkel von zwischen 5° und 20° aufwärts geneigt ist.

3. Form (100) gemäß Anspruch 2, bei der der geneigte Flächenbereich (10b) relativ zu dem ebenen Flächenbereich (10a) unter einem Winkel von etwa 13° aufwärts geneigt ist.

4. Form (100) gemäß einem der Ansprüche 1 bis 3, bei der das Verhältnis zwischen der kürzeren Seite (11) und der gegenüberliegenden Seite (13) zwischen 0,7 und 0,9 beträgt.

5. Form (100) gemäß einem der Ansprüche 1 bis 4, bei der der Behälter (1) eine Höhe von zwischen 150 und 200 mm aufweist.

6. Verfahren zum Zubereiten eines gekochten Schinkens, aufweisend die Schritte des Auswählens von Fleischteilen, des Ausbeinens, des Salzens, des Durchrührens, des Ladens der Teile rohen Fleisches in einen geeigneten Behälter einer Form, des Kochens, des Abkühlens, des Entfernens aus der Form und des Verpackens, **dadurch gekennzeichnet, dass** der Schritt des Kochens mit Hilfe der in den vorhergehenden Ansprüchen 1 bis 5 beschriebenen Form (100) durchgeführt wird.

7. Gekochter Schinken, der durch das in Anspruch 6 beschriebene Verfahren hergestellt ist.

## Revendications

1. Moule (100) pour faire cuire de la viande afin de préparer du jambon cuit, comprenant un récipient (1) et un couvercle (2), dans lequel le récipient (1) a une base sensiblement polygonale (10) comprenant trois côtés (12, 13, 14) agencés en une forme de C et reliés par des portions incurvées (13a, 13b), et un quatrième côté (11) qui est plus court que le côté opposé (13) et est relié aux côtés adjacents (12, 14) au moyen de portions sensiblement droites (11a, 11b), la base (10) étant formée par une portion de surface plate (10a) et une portion de surface inclinée vers le haut (10b), la portion de surface inclinée vers le haut (10b) correspondant sensiblement à la zone délimitée par le côté plus court (11) et par les portions respectives (11a, 11b) le reliant aux côtés adjacents, et la portion de surface plate (10a) correspondant sensiblement à la zone délimitée par les trois côtés (12, 13, 14) agencés en une forme de C et par les portions de connexion incurvées respectives (13a, 13b), **caractérisé en ce que** des parois latérales respectives (11', 11'a, 11'b, 12', 13', 13'a, 13'b, 14'), s'étendant sensiblement verticalement vers le haut sans interruption depuis les côtés (11, 11a, 11b, 12, 13, 13a, 13b, 14) de la base (10), sont reliées à la portion de surface plate (10a) de la base (10) par une portion périphérique incurvée formant une connexion ayant un profil arqué en coupe avec un rayon de courbure compris entre 50 et 70 mm.

2. Moule (100) selon la revendication 1, dans lequel la portion de surface inclinée (10b) est inclinée vers le haut par rapport à la portion de surface plate (10a) selon un angle compris entre 5° et 20°.

3. Moule (100) selon la revendication 2, dans lequel la portion de surface inclinée (10b) est inclinée vers le haut par rapport à la portion de surface plate (10a) selon un angle d'environ 13°.

4. Moule (100) selon l'une quelconque des revendications 1 à 3, dans lequel le rapport entre le côté plus court (11) et le côté opposé (13) est compris entre 0,7 et 0,9.

5. Moule (100) selon l'une quelconque des revendications 1 à 4, dans lequel le récipient (1) a une hauteur comprise entre 150 mm et 200 mm.

6. Procédé pour préparer un jambon cuit, comprenant les étapes consistant à sélectionner les morceaux de viande, désosser, saler, malaxer, charger les morceaux de viande crue dans un récipient approprié d'un moule, faire cuire, faire refroidir, extraire du moule, et emballer, le procédé étant **caractérisé en ce que** l'étape de cuisson est réalisée au moyen du moule (100) décrit dans les revendications précédentes 1 à 5.

7. Jambon cuit qui peut être produit par le procédé décrit dans la revendication 6.
